# EUROPEAN PATENT SPECIFICATION

(11) **EP 3 290 281 B1**
(45) Date of publication and mention of the grant of the patent: **02.12.2020**
(21) Application number: 16803582.2
(22) Date of filing: 05.04.2016
(51) Int. Cl.: B60W 30/06, B62D 15/02

(54) **AUTOMATIC PARKING METHOD AND SYSTEM OF VEHICLE**
AUTOMATISCHES PARKVERFAHREN UND FAHRZEUGSYSTEM
PROCÉDÉ ET SYSTÈME DE STATIONNEMENT AUTOMATIQUE DE VÉHICULE

(30) Priority: 29.05.2015 KR 20150076057
(43) Date of publication of application: 07.03.2018
(73) Proprietor: Beyond i Co., Ltd., Jungwon-gu, Seongnam-si, Gyeonggi-do, 13209 (KR)
(72) Inventor: HWANG, Dong-Guk, Jeungpyeong-gun Chungcheongbuk-do 27942 (KR)
(74) Representative: Manitz Finsterwald Patent- und Rechtsanwaltspartnerschaft mbB
(86) International application number: PCT/KR2016/003530
(87) International publication number: WO 2016/195227

(56) References cited:
- JP-A- 2004 034 946
- JP-B2- 5 446 500
- KR-A- 20140 106 126
- KR-A- 20140 144 470
- KR-B1- 100 857 330
- KR-B1- 101 340 738
- KR-B1- 101 498 976
- US-A1- 2006 136 109
- US-A1- 2009 278 709

## Description

### TECHNICAL FIELD

The present disclosure relates to an automatic parking method and system of a vehicle, and more particularly, to an automatic parking method and system of a vehicle, capable of automatically parking a vehicle using a top view image of the surroundings of the vehicle.

### BACKGROUND ART

In recent years, the problem of parking has emerged as a social issue as the demand for vehicles increased, and in particular, drivers often suffer difficulties when parking vehicles in small spaces. Oftentimes, no matter how good a driver is, the only way to park a car in a small space is to repeat moving the vehicle back and forth several times. And sometimes, it is necessary for someone else to guide the driver so that the driver can park the vehicle properly.

Conventionally, a system has been developed to assist a novice driver or a female driver to park the vehicle more easily and conveniently.

The conventional automatic parking system recognizes the parking space through a sensor or the like mounted on the vehicle and automatically controls the vehicle so that the vehicle can be parked in the recognized parking space.

As an example of a conventional automatic parking system, an automatic parking system based on an ultrasonic sensor has appeared, and such ultrasonic sensor-based automatic parking system recognizes obstacles in the surroundings of the vehicle and parking spaces through the ultrasonic sensor and generates a moving path of the vehicle.

However, since the conventional automatic parking system recognizes obstacle in the surroundings and parking spaces with only the ultrasonic sensor, in the absence of obstacles, it becomes difficult to recognize the parking space, and there is a limitation in flexibly coping with various situations or environments of application.

### [Prior Art Document]

Korean Patent No. 1998-040209 (Published on August 17, 1998)

An automatic parking method according to the preamble of claim 1 and an automatic system according to the preamble of claim 4 is known from US 2009/278709 A1, which is seen as the closest prior art.

### SUMMARY

### Technical Problem

Accordingly, it is an object of the present disclosure to provide an automatic parking method and system of a vehicle, which can be utilized for automatic parking of a vehicle by recognizing a parking space on the basis of a top view image of the surroundings of the vehicle and detecting two vehicle entry points by using information on an obstacle in the surroundings.

Further, in addition to the objects explicitly mentioned herein, the present disclosure includes other objects that can be achieved from the configuration of the present disclosure described below.

### Technical Solution

In order to achieve the technical objects mentioned above, an automatic parking method of a vehicle according to an embodiment of the present invention is provided, which may include: capturing an image of the surroundings of the vehicle and converting the captured image into a top view image; recognizing a parking space on the basis of the converted top view image; sensing obstacles in the parking space surroundings; detecting a first vehicle entry point and a second vehicle entry point in the parking space for parking the vehicle using information on the detected obstacles and information on a parking line in the parking space; and calculating a parking path of the vehicle using the first vehicle entry point and the second vehicle entry point which have been detected.

The parking line includes a boundary parking line that partitions the parking space, and an entry parking line through which the vehicle enters to park in the parking space, and the first vehicle entry point or the second vehicle entry point may include an intersection at which the boundary parking line and the entry parking line meet.

The automatic parking method includes in a first variant: when failing to detect the second vehicle entry point, detecting a point on the obstacle in the surroundings at a nearest distance to the first vehicle entry point; and generating the second vehicle entry point based on an intersection at which the entry parking line meets an extension line extending from the detected point on the obstacle in the surroundings and in parallel to the boundary parking line.

The automatic parking method includes in a second variant: when failing to detect the second vehicle entry point, detecting a point on the obstacle in the surroundings at a nearest distance to the boundary parking line; and generating the second vehicle entry point based on an intersection at which the entry parking line meets an extension line extending from the detected point on the obstacle in the surroundings and in parallel to the boundary parking line.

The boundary parking line may be a parking line partitioning between the parking space for parking the vehicle and a neighboring parking space where the obstacle in the surroundings is located, and the entry parking line may be a line of entering the neighboring parking space.

The point on the obstacle in the surroundings may include a vertex of the vehicle.

Meanwhile, an automatic parking system of a vehicle according to an embodiment of the present disclosure may be provided, which may include: an image processing unit configured to capture an image of surroundings of the vehicle and convert the captured image into a top view image; a space recognition unit configured to recognize a parking space on the basis of the converted top view image; an obstacle sensing unit configured to sense an obstacle in the parking space surroundings; an entry point detecting unit configured to detect a first vehicle entry point and a second vehicle entry point of the parking space for parking the vehicle using information on the sensed obstacle in the surroundings and information on a parking line in the parking space; and a path calculating unit configured to calculate a parking path of the vehicle using the first vehicle entry point and the second vehicle entry point which have been detected.

The parking line includes a boundary parking line that partitions the parking space, and an entry parking line through which the vehicle enters to park in the parking space, and the first vehicle entry point or the second vehicle entry point may include an intersection at which the boundary parking line and the entry parking line meet.

According to a first variant, the entry point detecting unit is configured to: when failing to detect the second vehicle entry point, detect a point on the obstacle in the surroundings at a nearest distance to the first vehicle entry point; and generate the second vehicle entry point based on an intersection at which the entry parking line meets an extension line extending from the detected point on the obstacle in the surroundings and in parallel to the boundary parking line.

According to a second variant, the entry point detecting unit is configured to: when failing to detect the second vehicle entry point, detect a point on the obstacle in the surroundings at a nearest distance to the boundary parking line; and generate the second vehicle entry point based on an intersection at which the entry parking line meets an extension line extending from the detected point on the obstacle in the surroundings and in parallel to the boundary parking line.

The boundary parking line may be a parking line partitioning between the parking space for parking the vehicle and a neighboring parking space where the obstacle in the surroundings is located, and the entry parking line may be a line of entering the neighboring parking space.

The point on the obstacle in the surroundings may include a vertex of the vehicle in the surroundings.

### Advantageous Effects

The present disclosure gives the following effects. According to the automatic parking method and system of a vehicle according to an embodiment of the present disclosure, there is an advantage that the automatic parking method and system can be used to allow a vehicle to be automatically parked by recognizing a parking space on the basis of a top view image of the surroundings of the vehicle and sensing obstacles in the surroundings of the vehicle and detecting two vehicle entry points.

In particular, even when one of two vehicle entry points may not be detected due to a blind spot, it is possible to newly generate and detect a vehicle entry point using the position of an obstacle in the surroundings and a parking line in the parking space, such that there is an advantage that more flexible and appropriate automatic parking can be performed in various situations or environments.

As described above, since the top view images of the surroundings of the vehicle captured at the plurality of cameras are used, there is an advantage that the situation of the surroundings of the vehicle can be recognized in real time, and the parking space can be recognized in any direction around the vehicle.

On the other hand, the effects of the present disclosure are not limited to those described above, and other effects that can be derived from the constitution of the present disclosure described below are also included in the effects of the present disclosure.

### BRIEF DESCRIPTION OF THE DRAWINGS

FIG. 1 is a schematic block diagram of an automatic parking system of a vehicle according to an embodiment of the present disclosure.
FIG. 2 is a view provided to explain a parking line according to an embodiment of the present disclosure.
FIG. 3 is a view provided to explain a method of detecting an entry point of a vehicle according to an embodiment of the present disclosure.
FIG. 4 is a view provided to explain a method of detecting an entry point of a vehicle according to another embodiment of the present disclosure.
FIG. 5 is a flowchart illustrating an automatic parking process of a vehicle according to an embodiment of the present disclosure.

### BEST MODE

Hereinafter, preferred embodiments of the present disclosure will be described in detail with reference to the accompanying drawings so that those with ordinary knowledge in the art can easily achieve the present disclosure.

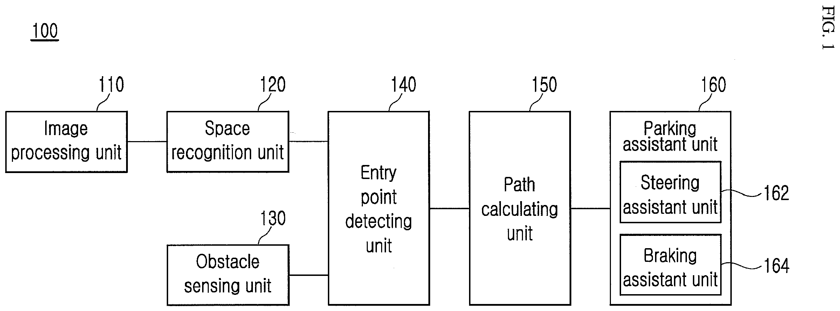

FIG. 1 shows a block diagram of an automatic parking system of a vehicle according to an embodiment of the present disclosure.

As shown in FIG. 1, the automatic parking system 100 of a vehicle includes an image processing unit 110, a space recognition unit 120, an obstacle sensing unit 130, an entry point detecting unit 140, a path calculating unit 150, and a parking assistant unit 160.

The image processing unit 110 may capture an image of the surroundings of the vehicle and convert the captured image into a top view image.

More specifically, the image processing unit 110 may acquire a plurality of images captured by a plurality of cameras respectively installed at the front, rear, left, and right sides of the vehicle, and convert a plurality of acquired images into images at top view viewpoints such that top view images combining a plurality of images can be generated. That is, the image processing unit 110 may convert each image into an image at a virtual viewpoint to generate a top view image in which a plurality of images are combined.

The plurality of cameras may include a lens having a large angle of view such as a wide angle lens or a fish eye lens, and the front and rear cameras may be installed such that the surrounding within at least 170 degrees is captured with reference to a vertical line to the ground.

As a result of processing the images of the surroundings of the vehicle as described above, the image processing unit 110 may acquire plane images showing the front, rear, left, and right sides of the vehicle as if the vehicle is viewed from a predetermined position on a top side of the vehicle.

The space recognition unit 120 may recognize the parking space on the basis of the top view image converted by the image processing unit 110.

More specifically, the space recognition unit 120 acquires the top view images periodically or continuously from the image acquisition unit 110, and compares a plurality of periodically- or continuously-acquired top view images to recognize the parking space. At this time, in order to recognize the parking space, the space recognition unit 120 may use image processing and image recognition technology, which may extract main feature points of a plurality of top view images, and matches and compares the extracted main feature points with each other.

At this time, the parking space includes a parking line, and the space recognition unit 120 may recognize the parking line together with the parking space. The parking line may be recognized with a method of generating a contour image from the top view images and extracting the main feature points by searching the generated contour image in a horizontal or vertical direction.

The obstacle sensing unit 130 may sense an obstacle in the parking space surroundings. The obstacle sensing unit 130 may include sensors disposed on the front, rear, left, or right sides of the vehicle to sense an obstacle in the parking space surroundings (e.g., another vehicle in a neighboring parking space adjacent to the target parking space intended for the parking of the vehicle). Alternatively, likewise the space recognition unit 120, the obstacle sensing unit 130 may receive the top view images converted by the image processing unit 110,and may use an image processing and image recognition technology for matching and comparing the feature points with each other to sense an obstacle in the parking space surroundings in the top view image on the basis of the top view image.

The entry point detecting unit 140 may detect a first vehicle entry point and a second vehicle entry point of the parking space intended for parking the vehicle, using the information on the obstacle in the surroundings sensed at the obstacle sensing unit 130 and the information on the parking line recognized at the space recognition unit 120. In this example, the first vehicle entry point and the second vehicle entry point serve as a starting point at which the vehicle enters the target parking space to park in the target parking space, and they may be located on the parking line of the target parking space.

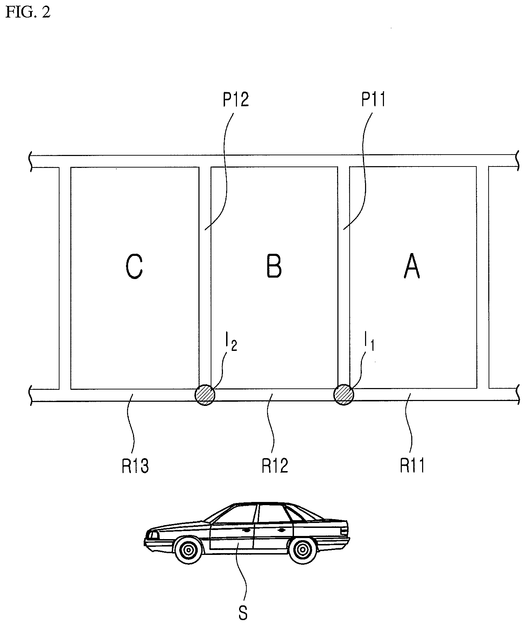

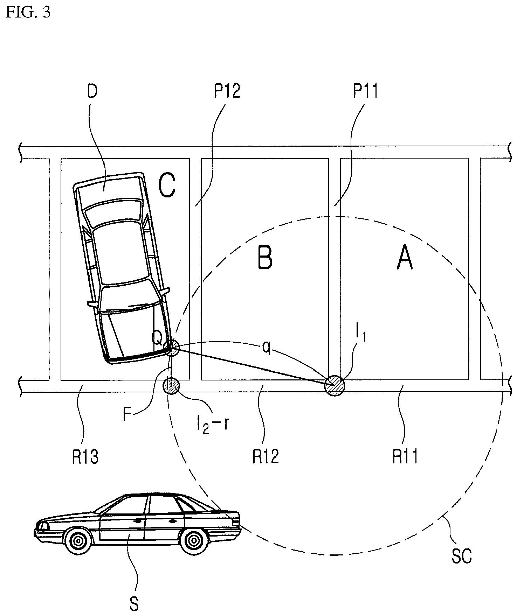

FIG. 2 is a view provided to explain a parking line according to an embodiment of the present disclosure. FIG. 3 is a view provided to explain a method of detecting an entry point of a vehicle according to an embodiment of the present disclosure.

As shown in FIG. 2, the parking line may include a plurality of boundary parking lines P11 to P12 partitioning between a plurality of parking spaces A, B, and C, and a plurality of entry parking lines R11 to R13 through which the vehicle S enters to park in the plurality of parking spaces A, B, and C. For example, the boundary parking line P11 may partition the parking space A and the parking space B, and the boundary parking line P12 may partition the parking space B and the parking space C. In an example of parking with reference to the position of the vehicle S shown in FIG. 2, the entry parking line of the parking space A may be entry parking line R11, the entry parking line of the parking space B may be entry parking line R12, and the entry parking line of the parking space C may be entry parking line R13.

The entry point detecting unit 140 may detect the first vehicle entry point and the second vehicle entry point, respectively, based on two intersections where the boundary parking line and the entry parking line meet, such that, when the vehicle S is parked in the parking space B, the first vehicle entry point I1 may be an intersection where the boundary parking line P11 and the entry parking line R12 meet, and the second vehicle entry point 12 may be an intersection where the boundary parking line P12 and the entry parking line R12 meet.

However, when either of the two vehicle entry points is not detected due to the blind spot, the entry point detecting unit 140 may detect the vehicle entry point using the shape and position information of the obstacle in the surroundings detected at the obstacle sensing unit 130, and the parking line information recognized at the space recognition unit 120.

More specifically, referring to FIG. 3, when the entry point detecting unit 140 detects the first vehicle entry point I1 based on an intersection at which the first boundary parking line P11, partitioning between a target parking space (parking space B) and a first neighboring parking space (parking space A), meets the entry parking line R12 entering the target parking space (parking space B), but fails to detect the second vehicle entry point due to the blind spot, the entry point detecting unit 140 may detect point Q of the obstacle D in the surroundings at a nearest distance to the first vehicle entry point I1. In this example, the point Q on the obstacle D in the surroundings may include a vertex or an edge, etc., of the surrounding vehicle located closest to the first vehicle entry point I1, and in order to detect the point on the obstacle in the surroundings at the nearest distance, the entry point detecting unit 140 may generate a virtual circle SC centering on the first vehicle entry point I1 and then detect a vertex of a neighboring vehicle at the nearest distance q to the first vehicle entry point I1.

In addition, the entry point detecting unit 140 may generate and detect a second vehicle entry point I2_r based on an intersection at which an extension line F, which extends from the detected point Q on the obstacle D in the surroundings and in parallel to the second boundary parking line P12 partitioning between the target parking space (e.g., parking space B) and the second neighboring parking space (e.g., parking space C) where the obstacle in the surroundings is located, meets the entry parking line R13 of the second neighboring parking space (e.g., parking space C).

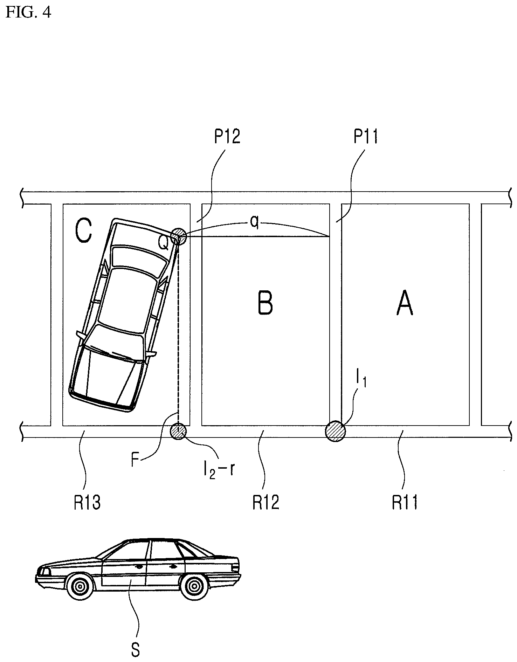

FIG. 4 is a view provided to explain a method of detecting an entry point of a vehicle according to another embodiment of the present disclosure.

As shown in FIG. 4, when the entry point detecting unit 140 detects the first vehicle entry point I1 based on an intersection at which the first boundary parking line P11, partitioning between the target parking space (e.g., parking space B) and the first neighboring parking space (e.g., parking space A), meets the entry parking line R12 entering the target parking space (e.g., parking space B), but fails to detect the second vehicle entry point due to the blind spot, the entry point detecting unit 140 may detect a point Q on the obstacle D in the surroundings at the nearest distance q to the first boundary parking line P11 partitioning between the target parking space (e.g., parking space B) and the first neighboring parking space (e.g., parking space A),and may generate and detect a second vehicle entry point I2_r based on an intersection at which an extension line F, which extends from the detected point Q on the obstacle D in the surroundings and in parallel to the first boundary parking line P11, meets an entry parking line entering the second neighboring parking space C where the obstacle in the surroundings is located.

As described above, even when one of two vehicle entry points may not be detected due to a blind spot, it is possible to newly generate and detect a vehicle entry point using the position of an obstacle in the surroundings and a parking line, such that more flexible and appropriate automatic parking may be performed in various situations or environments.

The path calculating unit 150 may calculate a parking path of the vehicle using the detected first vehicle entry point and second vehicle entry point.

More specifically, the path calculating unit 150 sets a parking position of the vehicle within the target parking space (i.e., parking end point), and connects the first vehicle entry point and the second vehicle entry point to the parking end point on the basis of a preset turning angle and turning radius of the vehicle to generate a parking path.

The parking assistant unit 160 may assist parking of the vehicle according to the parking path generated at the path calculating unit 150. Alternatively, when need arises, the parking assistant unit 160 may guide the user about the parking path of the vehicle and assist him or her to place the vehicle at an appropriate position, through an audiovisual means such as voice, guidance message, and so on.

More specifically, the parking assistant unit 160 includes a steering assistant unit 162 and a braking assistant unit 164, and the steering assistant unit 162 generates target steering angle information for enabling the vehicle to follow the parking path using the parking path generated at the path calculating unit 150, and then performs steering control of the vehicle using the generated target steering angle information. That is, when the steering assistant unit 162 transmits the target steering angle information to the steering device, the steering device performs the steering control by driving the motor with the current corresponding to the target steering angle. The steering device is a steering assisting means for assisting steering of the vehicle, and may include an Electric Power Steering (EPS) and Motor Driven Power Steering (MDPS).

The braking assistant unit 164 may determine the position of the vehicle on the parking path and distance to the obstacle, and control the braking device according to the result thereof to limit the moving speed of the vehicle or brake the vehicle. The braking device may include a braking device such as an Anti-Lock Braking System (ABS), Electronic Stability Control (ESC), and so on, which is capable of controlling the braking forces of the inner wheel and the outer wheel differently.

Hereinafter, a method of automatically parking a vehicle according to an embodiment of the present disclosure will be described.

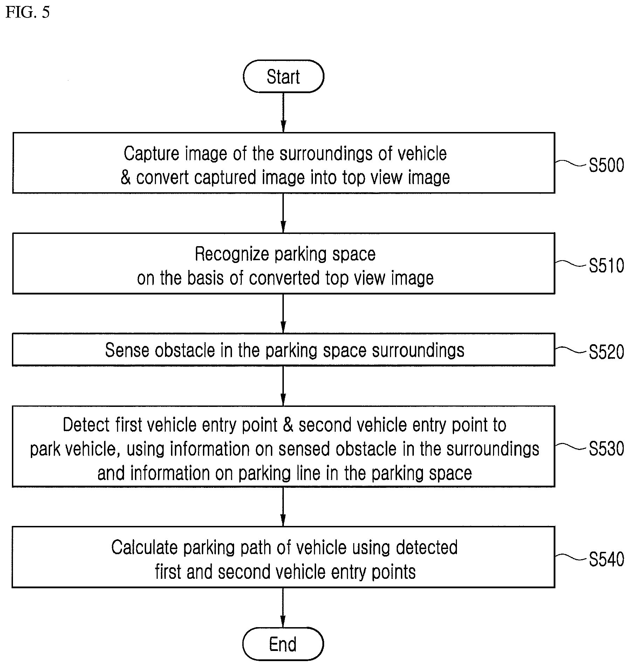

FIG. 5 shows a flowchart illustrating an automatic parking process of a vehicle according to an embodiment of the present disclosure.

As shown in FIG. 5, the image of the surroundings of the vehicle is captured, and the captured image is converted into a top view image, at S500. A plurality of images captured by a plurality of cameras respectively provided at the front, rear, left, and right sides of the vehicle may be acquired, and a plurality of acquired images may be converted into images at the top view viewpoints such that top view images combining a plurality of images may be generated. That is, the image processing unit 110 may convert each of the images into images at virtual viewpoints and synthesize them to generate top view images in which a plurality of images are combined.

Next, the parking space may be recognized on the basis of the converted top view image, at S510.

More specifically, the top view images are acquired periodically or continuously from the image acquisition unit 110, and a plurality of periodically- or continuously-acquired top view images are compared to recognize the parking space. At this time, in order to recognize the parking space, the image processing and image recognition technology may be used, which may extract main feature points of a plurality of top view images, and match and compare the extracted main feature points with each other.

At this time, the parking space includes a parking line, and accordingly, the parking line may be recognized together with the parking space. The parking line may be recognized with a method of generating a contour image from the top view images and extracting the main feature points by searching the generated contour image in a horizontal or vertical direction.

Then, an obstacle in the parking space surroundings may be detected at S520.

The obstacle sensing unit 130 may include sensors disposed on the front, rear, left, or right sides of the vehicle to sense an obstacle in the parking space surroundings (e.g., another vehicle in a neighboring parking space adjacent to the target parking space intended for the parking of the vehicle). Alternatively, likewise the space recognition unit 120, the obstacle sensing unit 130 may receive the top view images converted by the image processing unit 110,and may use an image processing and image recognition technology for matching and comparing the feature points with each other to sense an obstacle in the parking space surroundings in the top view image on the basis of the top view image.

Then, the first vehicle entry point and the second vehicle entry point of the parking space for parking the vehicle may be detected using the information on the detected obstacle in the surroundings and the information on the parking line in the parking space, at S530. In this example, the first vehicle entry point and the second vehicle entry point serve as a starting point at which the vehicle enters the target parking space to park in the target parking space, and they may be located on the parking line of the target parking space. The parking line may include a plurality of boundary parking lines P11 to P12 partitioning between a plurality of parking spaces A, B, and C, and a plurality of entry parking lines R11 to R13 through which the vehicle S enters to park in the plurality of parking spaces A, B, and C.

The entry point detecting unit 140 may detect the first vehicle entry point and the second vehicle entry point, respectively, based on two intersections where the boundary parking line and the entry parking line meet, such that, when the vehicle S is parked in the parking space B, the first vehicle entry point I1 may be an intersection where the boundary parking line P11 and the entry parking line R12 meet, and the second vehicle entry point 12 may be an intersection where the boundary parking line P12 and the entry parking line R12 meet.

However, when either of the two vehicle entry points is not detected due to the blind spot, the entry point detecting unit 140 may detect the vehicle entry point using the shape and position information of the obstacle in the surroundings detected at the obstacle sensing unit 130, and the parking line information recognized at the space recognition unit 120.

More specifically, referring to FIG. 3, when the entry point detecting unit 140 detects the first vehicle entry point I1 based on an intersection at which the first boundary parking line P11, partitioning between a target parking space (parking space B) and a first neighboring parking space (parking space A), meets the entry parking line R12 entering the target parking space (parking space B), but fails to detect the second vehicle entry point due to the blind spot ,the entry point detecting unit 140 may detect point Q of the obstacle D in the surroundings at a nearest distance to the first vehicle entry point I1. In this example, the point Q on the obstacle D in the surroundings may include a vertex or an edge, etc., of the surrounding vehicle located closest to the first vehicle entry point I1, and in order to detect the point on the obstacle in the surroundings at the nearest distance, the entry point detecting unit 140 may generate a virtual circle SC having a predetermined radius and detect a vertex of the surrounding vehicle, or the like that is present in the virtual circle SC.

In addition, the entry point detecting unit 140 may generate and detect a second vehicle entry point I2_r based on an intersection at which an extension line F, which extends from the detected point Q on the obstacle D in the surroundings and in parallel to the second boundary parking line P12 partitioning between the target parking space (e.g., parking space B) and the second neighboring parking space (e.g., parking space C) where the obstacle in the surroundings is located, meets the entry parking line R13 of the second neighboring parking space (e.g., parking space C).

As shown in FIG. 4, when the entry point detecting unit 140 detects the first vehicle entry point I1 based on an intersection at which the first boundary parking line P11, partitioning between the target parking space (e.g., parking space B) and the first neighboring parking space (e.g., parking space A), meets the entry parking line R12 entering the target parking space (e.g., parking space B), but fails to detect the second vehicle entry point due to the blind spot, the entry point detecting unit 140 may detect a point Q on the obstacle D in the surroundings at the nearest distance to the first boundary parking line P11 partitioning between the target parking space (e.g., parking space B) and the first neighboring parking space (e.g., parking space A),and may generate and detect a second vehicle entry point I2_r based on an intersection at which an extension line F, which extends from the detected point Q on the obstacle D in the surroundings and in parallel to the first boundary parking line P11, meets an entry parking line entering the second neighboring parking space C where the obstacle in the surroundings is located.

Next, a parking path of the vehicle may be calculated, using the detected first vehicle entry point and second vehicle entry point, at S540.

More specifically, the path calculating unit 150 may set a parking position of the vehicle within the target parking space (i.e., parking end point), and connect the first vehicle entry point and the second vehicle entry point to the parking end point on the basis of a preset turning angle and turning radius of the vehicle to generate a parking path.

Then, assistance may be provided for the parking of the vehicle according to the generated parking route. Alternatively, the user may be guided about the parking path of the vehicle and assisted to place the vehicle at an appropriate position, by an audiovisual means such as voice, guidance message, and so on.

Embodiments of the present disclosure include a computer-readable medium including program instructions for performing various computer-implemented operations. The medium records a program for executing the automatic parking method described above. The medium may include program instructions, data files, data structures, etc., alone or in combination. Examples of such medium include hardware device configured to store and execute program instructions, such as, a magnetic medium such as hard disk, floppy disk and magnetic tape, an optical recording medium such as CD and DVD, a floptical disk and a magneto-optical medium, ROM, RAM, flash memory, etc. In addition, such medium may be a transmission medium, such as an optical or metal line, a waveguide, etc., including a carrier wave that transmits a signal designating program instructions, data structures, or the like. Examples of the program instructions include machine language codes such as those generated by a compiler, as well as high-level language codes that may be executed by a computer using an interpreter, and so on.

The present disclosure has been described in detail. However, it should be understood that the detailed description and specific examples, while indicating preferred embodiments of the disclosure, are given by way of illustration only, since various changes and modifications within the scope of the claims will become apparent to those skilled in the art from this detailed description.

## Claims

1. An automatic parking method of a vehicle, comprising:
capturing an image of surroundings of the vehicle (S) and converting the captured image into a top view image;
recognizing a parking space (A, B, C) on the basis of the converted top view image;
sensing an obstacle (D) in the parking space surroundings;
detecting a first vehicle entry point (II) and a second vehicle entry point (I2, I2_r) of the parking space for parking the vehicle using information on the sensed obstacle in the surroundings and information on a parking line in the parking space (A, B, C); and
calculating a parking path of the vehicle using the first vehicle entry point and the second vehicle entry point which have been detected,
**characterized in that**
the parking line comprises a boundary parking line (P11 to P12) that partitions the parking space, and an entry parking line (R11 to R13) through which the vehicle enters to park in the parking space, and
the first vehicle entry point or the second vehicle entry point comprises an intersection at which the boundary parking line and the entry parking line meet, and
**in that** the automatic parking method further comprises:
when failing to detect the second vehicle entry point, detecting a point (Q) on the obstacle in the surroundings at a nearest distance (q) to the first vehicle entry point; and
generating the second vehicle entry point based on an intersection at which the entry parking line meets an extension (F) line extending from the detected point on the obstacle in the surroundings and in parallel to the boundary parking line, or
**in that** the automatic parking further comprises:
when failing to detect the second vehicle entry point, detecting a point (Q) on the obstacle in the surroundings at a nearest distance (q) to the boundary parking line; and
generating the second vehicle entry point based on an intersection at which the entry parking line meets an extension line (F) extending from the detected point on the obstacle in the surroundings and in parallel to the boundary parking line.

2. The automatic parking method of claim 1, wherein the boundary parking line is a parking line partitioning between the parking space for parking the vehicle and a neighboring parking space where the obstacle in the surroundings is located, and
the entry parking line is a line of entering the neighboring parking space.

3. The automatic parking method of claim 1, wherein the point on the obstacle in the surroundings comprises a vertex of the vehicle.

4. An automatic parking system of a vehicle, comprising:
an image processing unit (110) configured to capture an image of surroundings of the vehicle (S) and convert the captured image into a top view image;
a space recognition unit (120) configured to recognize a parking space (A, B, C) on the basis of the converted top view image;
an obstacle sensing unit (130) configured to sense an obstacle (D) in the parking space surroundings;
an entry point detecting unit (140) configured to detect a first vehicle entry point (I1) and a second vehicle entry point (I2, I2_r) of the parking space for parking the vehicle using information on the sensed obstacle in the surroundings and information on a parking line in the parking space; and
a path calculating unit (150) configured to calculate a parking path of the vehicle using the first vehicle entry point and the second vehicle entry point which have been detected,
**characterized in that**
the parking line comprises a boundary parking line (P11 to P12) that partitions the parking space, and an entry parking line (R11 to R13) through which the vehicle enters to park in the parking space, and
the first vehicle entry point or the second vehicle entry point comprises an intersection at which the boundary parking line and the entry parking line meet, and
**in that** the entry point detecting unit is configured to:
when failing to detect the second vehicle entry point, detect a point (Q) on the obstacle in the surroundings at a nearest distance (q) to the first vehicle entry point; and
generate the second vehicle entry point based on an intersection at which the entry parking line meets an extension line (F) extending from the detected point on the obstacle in the surroundings and in parallel to the boundary parking line, or
**in that** the entry point detecting unit is configured to:
when failing to detect the second vehicle entry point, detect a point (Q) on the obstacle in the surroundings at a nearest distance (q) to the boundary parking line; and
generate the second vehicle entry point based on an intersection at which the entry parking line meets an extension line (F) extending from the detected point on the obstacle in the surroundings and in parallel to the boundary parking line.

5. The automatic parking system of claim 4, wherein the boundary parking line is a parking line partitioning between the parking space for parking the vehicle and a neighboring parking space where the obstacle in the surroundings is located, and
the entry parking line is a line of entering the neighboring parking space.

6. The automatic parking system of claim 4, wherein the point on the obstacle in the surroundings comprises a vertex of the vehicle in the surroundings.

## Patentansprüche

1. Verfahren zum automatischen Parken eines Fahrzeugs, das umfasst, dass:
ein Bild der Umgebung des Fahrzeugs (S) erfasst wird und das erfasste Bild in ein Draufsichtbild umgewandelt wird;
eine Parklücke (A, B, C) auf der Grundlage des umgewandelten Draufsichtbilds erkannt wird;
ein Hindernis (D) in der Umgebung der Parklücke erfasst wird;
ein erster Fahrzeugeintrittspunkt (I1) und ein zweiter Fahrzeugeintrittspunkt (I2, I2_r) der Parklücke zum Parken des Fahrzeugs unter Verwendung einer Information hinsichtlich des erfassten Hindernisses in der Umgebung und einer Information hinsichtlich einer Parklinie in der Parklücke (A, B, C) detektiert werden; und
ein Parkpfad des Fahrzeugs unter Verwendung des ersten Fahrzeugeintrittspunkts und des zweiten Fahrzeugeintrittspunkts, die detektiert wurden, berechnet wird,
**dadurch gekennzeichnet, dass**
die Parklinie eine Begrenzungsparklinie (P11 bis P12), die die Parklücke abtrennt, und eine Eintrittsparklinie (R11 bis R13), über die das Fahrzeug hineinfährt, um in der Parklücke zu parken, umfasst, und
der erste Fahrzeugeintrittspunkt oder der zweite Fahrzeugeintrittspunkt einen Schnittpunkt umfasst, an dem sich die Begrenzungsparklinie und die Eintrittsparklinie treffen, und
dass das Verfahren zum automatischen Parken ferner umfasst, dass:
wenn es nicht gelingt, den zweiten Fahrzeugeintrittspunkt zu detektieren, ein Punkt (Q) an dem Hindernis in der Umgebung mit einer nächstliegenden Distanz (q) zu dem ersten Fahrzeugeintrittspunkt detektiert wird; und
der zweite Fahrzeugeintrittspunkt basierend auf einem Schnittpunkt erzeugt wird, an dem die Eintrittsparklinie eine Linie einer Verlängerung (F) trifft, die sich von dem detektierten Punkt an dem Hindernis in der Umgebung und parallel zu der Begrenzungsparklinie erstreckt, oder
dass das automatische Parken ferner umfasst, dass:
wenn es nicht gelingt, den zweiten Fahrzeugeintrittspunkt zu detektieren, ein Punkt (Q) an dem Hindernis in der Umgebung mit einer nächstliegenden Distanz (q) zu der Begrenzungsparklinie detektiert wird; und
der zweite Fahrzeugeintrittspunkt basierend auf einem Schnittpunkt erzeugt wird, an dem die Eintrittsparklinie eine Verlängerungslinie (F) trifft, die sich von dem detektierten Punkt an dem Hindernis in der Umgebung und parallel zu der Begrenzungsparklinie erstreckt.

2. Verfahren zum automatischen Parken nach Anspruch 1, wobei die Begrenzungsparklinie eine Parklinie ist, die zwischen der Parklücke zum Parken des Fahrzeugs und einer Nachbarparklücke, in der sich das Hindernis in der Umgebung befindet, abtrennt, und
die Eintrittsparklinie eine Linie eines Hineinfahrens in die Nachbarparklücke ist.

3. Verfahren zum automatischen Parken nach Anspruch 1, wobei der Punkt an dem Hindernis in der Umgebung einen Eckpunkt des Fahrzeugs umfasst.

4. System zum automatischen Parken eines Fahrzeugs, umfassend:
eine Bildverarbeitungseinheit (110), die ausgestaltet ist, um ein Bild der Umgebung des Fahrzeugs (S) zu erfassen und das erfasste Bild in ein Draufsichtbild umzuwandeln;
eine Lückenerkennungseinheit (120), die ausgestaltet ist, um eine Parklücke (A, B, C) auf der Grundlage des umgewandelten Draufsichtbilds zu erkennen;
eine Hinderniserfassungseinheit (130), die ausgestaltet ist, um ein Hindernis (D) in der Umgebung der Parklücke zu erfassen;
eine Eintrittspunktdetektionseinheit (140), die ausgestaltet ist, um einen ersten Fahrzeugeintrittspunkt (I1) und einen zweiten Fahrzeugeintrittspunkt (I2, I2_r) der Parklücke zum Parken des Fahrzeugs unter Verwendung einer Information hinsichtlich des erfassten Hindernisses in der Umgebung und einer Information hinsichtlich einer Parklinie in der Parklücke zu detektieren; und
eine Pfadberechnungseinheit (150), die ausgestaltet ist, um einen Parkpfad des Fahrzeugs unter Verwendung des ersten Fahrzeugeintrittspunkts und des zweiten Fahrzeugeintrittspunkts, die detektiert wurden, zu berechnen,
**dadurch gekennzeichnet, dass**
die Parklinie eine Begrenzungsparklinie (P11 bis P12), die die Parklücke abtrennt, und eine Eintrittsparklinie (R11 bis R13), über die das Fahrzeug hineinfährt, um in der Parklücke zu parken, umfasst, und
der erste Fahrzeugeintrittspunkt oder der zweite Fahrzeugeintrittspunkt einen Schnittpunkt umfasst, an dem sich die Begrenzungsparklinie und die Eintrittsparklinie treffen, und
dass die Eintrittspunktdetektionseinheit ausgestaltet ist, um:
wenn es nicht gelingt, den zweiten Fahrzeugeintrittspunkt zu detektieren, einen Punkt (Q) an dem Hindernis in der Umgebung mit einer nächstliegenden Distanz (q) zu dem ersten Fahrzeugeintrittspunkt zu detektieren; und
den zweiten Fahrzeugeintrittspunkt basierend auf einem Schnittpunkt zu erzeugen, an dem die Eintrittsparklinie eine Verlängerungslinie (F) trifft, die sich von dem detektierten Punkt an dem Hindernis in der Umgebung und parallel zu der Begrenzungsparklinie erstreckt, oder
dass die Eintrittspunktdetektionseinheit ausgestaltet ist, um:
wenn es nicht gelingt, den zweiten Fahrzeugeintrittspunkt zu detektieren, einen Punkt (Q) an dem Hindernis in der Umgebung mit einer nächstliegenden Distanz (q) zu der Begrenzungsparklinie zu detektieren; und
den zweiten Fahrzeugeintrittspunkt basierend auf einem Schnittpunkt zu erzeugen, an dem die Eintrittsparklinie eine Verlängerungslinie (F) trifft, die sich von dem detektierten Punkt an dem Hindernis in der Umgebung und parallel zu der Begrenzungsparklinie erstreckt.

5. System zum automatischen Parken nach Anspruch 4, wobei die Begrenzungsparklinie eine Parklinie ist, die zwischen der Parklücke zum Parken des Fahrzeugs und einer Nachbarparklücke, in der sich das Hindernis in der Umgebung befindet, abtrennt, und
die Eintrittsparklinie eine Linie eines Hineinfahrens in die Nachbarparklücke ist.

6. System zum automatischen Parken nach Anspruch 4, wobei der Punkt an dem Hindernis in der Umgebung einen Eckpunkt des Fahrzeugs in der Umgebung umfasst.

## Revendications

1. Procédé de stationnement automatique d'un véhicule, comprenant les étapes consistant à :
capturer une image des environs du véhicule (S) et convertir l'image capturée en image en vue de dessus ;
reconnaître un espace de stationnement (A, B, C) sur la base de l'image en vue de dessus convertie ;
capter un obstacle (D) dans les environs de l'espace de stationnement ;
détecter un premier point d'entrée de véhicule (I1) et un second point d'entrée de véhicule (I2, I2_r) de l'espace de stationnement pour stationner le véhicule en utilisant une information sur l'obstacle captée dans les environs et une information concernant une ligne de stationnement dans l'espace de stationnement (A, B, C) ; et
calculer un trajet de stationnement du véhicule en utilisant le premier point d'entrée de véhicule et le second point d'entrée de véhicule qui ont été détectés,
**caractérisé en ce que**
la ligne de stationnement comprend une ligne de stationnement frontière (P11 à P12) qui cloisonne l'espace de stationnement, et une ligne de stationnement d'entrée (R11 à R13) à travers laquelle le véhicule entre pour stationner dans l'espace de stationnement, et
le premier point d'entrée de véhicule ou le second point d'entrée de véhicule comprend une intersection au niveau de laquelle la ligne de stationnement frontière et la ligne de stationnement d'entrée se rencontrent, et
**en ce que** le procédé de stationnement automatique comprend en outre les étapes consistant à :
en cas de défaillance de détection du second point d'entrée de véhicule, détecter un point (Q) sur l'obstacle dans les environs à une distance la plus rapprochée (q) du premier point d'entrée de véhicule ; et
générer le second point d'entrée de véhicule sur la base d'une intersection à laquelle la ligne de stationnement d'entrée rencontre une ligne de prolongement (F) depuis le point détecté sur l'obstacle dans les environs et en parallèle à la ligne de stationnement frontière, ou
**en ce que** le stationnement automatique comprend en outre les étapes consistant à :
en cas de défaillance de détection du second point d'entrée de véhicule, détecter un point (Q) sur l'obstacle dans les environs à une distance la plus rapprochée (q) de la ligne de stationnement frontière ; et
générer le second point d'entrée de véhicule sur la base d'une intersection au niveau de laquelle la ligne de stationnement d'entrée rencontre une ligne d'extension (F) s'étendant depuis le point détecté sur l'obstacle dans les environs et parallèle à la ligne de stationnement frontière.

2. Procédé de stationnement automatique selon la revendication 1, dans lequel la ligne de stationnement frontière est une ligne de stationnement qui effectue un cloisonnement entre l'espace de stationnement pour stationner le véhicule et un espace de stationnement voisin dans lequel l'obstacle dans les environs est situé, et
la ligne de stationnement d'entrée est une ligne pour entrer dans l'espace de stationnement voisin.

3. Procédé de stationnement automatique selon la revendication 1, dans lequel le point sur l'obstacle dans les environs comprend un sommet du véhicule.

4. Système de stationnement automatique d'un véhicule, comprenant :
une unité de traitement d'image (110) configurée pour capturer une image des environs du véhicule (S) et pour convertir l'image capturée en une image en vue de dessus ;
une unité de reconnaissance d'espace (120) configurée pour reconnaître un espace de stationnement (A, B, C) sur la base de l'image en vue de dessus convertie ;
une unité de captage d'obstacle (130) configurée pour capter un obstacle (D) dans les environs de l'espace de stationnement ;
une unité de détection de point d'entrée (140) configurée pour détecter un premier point d'entrée de véhicule (I1) et un second point d'entrée de véhicule (I2, I2_r) de l'espace de stationnement pour stationner le véhicule en utilisant une information sur l'obstacle capté dans les environs et une information sur une ligne de stationnement dans l'espace de stationnement ; et
une unité de calcul de trajet (150) configurée pour calculer un trajet de stationnement du véhicule en utilisant le premier point d'entrée de véhicule et le second point d'entrée de véhicule qui ont été détectés,
**caractérisé en ce que**
la ligne de stationnement comprend une ligne de stationnement frontière (P11 à P12) qui cloisonne l'espace de stationnement, et une ligne de stationnement d'entrée (R11 à R13) à travers laquelle le véhicule entre pour stationner dans l'espace de stationnement, et
le premier point d'entrée de véhicule ou le second point d'entrée de véhicule comprend une intersection au niveau de laquelle la ligne de stationnement frontière et la ligne de stationnement d'entrée se rencontrent, et
**en ce que** l'unité de détection de point d'entrée est configurée pour :
en cas de défaillance de détection du second point d'entrée de véhicule, détecter un point (Q) sur l'obstacle dans les environs à une distance la plus rapprochée (q) du premier point d'entrée de véhicule ; et
générer le second point d'entrée de véhicule sur la base d'une intersection au niveau de laquelle la ligne de stationnement d'entrée rencontre une ligne d'extension (F) s'étendant depuis le point détecté sur l'obstacle dans les environs et parallèle à la ligne de stationnement frontière, ou
**en ce que** l'unité de détection de point d'entrée est configurée pour :
en cas de défaillance de détection du second point d'entrée de véhicule, détecter un point (Q) sur l'obstacle dans les environs à une distance la plus rapprochée (q) de la ligne de stationnement frontière ; et
générer le second point d'entrée de véhicule sur la base d'une intersection au niveau de laquelle la ligne de stationnement d'entrée rencontre une ligne d'extension (F) s'étendant depuis le point détecté sur l'obstacle dans les environs et parallèle à la ligne de stationnement frontière.

5. Système de stationnement automatique selon la revendication 4, dans lequel la ligne de stationnement frontière est une ligne de stationnement qui effectue un cloisonnement entre l'espace de stationnement pour stationner le véhicule et un espace de stationnement voisin dans lequel l'obstacle dans les environs est situé, et
la ligne de stationnement d'entrée est une ligne pour entrer dans l'espace de stationnement voisin.

6. Système de stationnement automatique selon la revendication 4, dans lequel le point sur l'obstacle dans les environs comprend un sommet du véhicule dans les environs.
